Europäisches Patentamt

European Patent Office

Office européen des brevets

(19)

(11) Publication number: **0 162 433**
**A2**

(12)

# EUROPEAN PATENT APPLICATION

(21) Application number: 85106166.3

(51) Int. Cl.⁴: **H 04 N 9/07**

(22) Date of filing: 20.05.85

(30) Priority: 18.05.84 JP 98692/84

(43) Date of publication of application:
27.11.85 Bulletin 85/48

(84) Designated Contracting States:
DE FR NL

(71) Applicant: HITACHI, LTD.
6, Kanda Surugadai 4-chome Chiyoda-ku
Tokyo 100(JP)

(72) Inventor: Unnai, Takaaki
3550, Hayano
Mobara-shi Chiba(JP)

(72) Inventor: Sokei, Hiroichi
520, Hayano
Mobara-shi Chiba(JP)

(72) Inventor: Nobutoki, Saburo
742-1, Kawada Shimonagayoshi
Mobara-shi Chiba(JP)

(74) Representative: Dipl.-Ing. H. Hauck Dipl.-Phys. W.
Schmitz Dipl.-Ing. E. Graalfs Dipl.-Ing. W. Wehnert
Dr.-Ing. W. Döring
Mozartstrasse 23
D-8000 München 2(DE)

(54) Color separation filter.

(57) In a color separation filter for a camera tube for a single-camera-tube type color television camera, a magenta filter having a light absorption wavelength range of 550 to 570 nm and a transmittance of 40 to 75% at the light absorption wavelength range is formed at portions without a cyan filter or portions without cyan and yellow filters. The portions fall within an effective imaging surface. The spectral transmittance characteristics of the magenta filter substantially correspond to those of the cyan filter between a wavelength of a blue component and a wavelength of about 560 nm within the visible light range. The average transmittance of the cyan filter at a wavelength range of 620 to 680 nm is set to be 8% or less.

FIG.2

EP 0 162 433 A2

Specification

Title of the Invention

Color Separation Filter

Background of the Invention

The present invention relates to a color separation filter in a camera tube for a single-camera-tube color television camera and, more particularly, to an improvement of cyan and yellow filter color separation systems.

Conventional stripe filters as color separation filters are generally classified into a filter using a dichroic filter of a metal oxide deposited multilayer and an organic stripe filter obtained by dyeing organic stripes with organic dyes. The present invention is concerned with the organic stripe filter.

A conventional single-camera-tube type color television camera having cyan and yellow color separation systems has poor color reproduction fidelity as compared with a three-camera-tube type color television camera. For this reason, an improved single-camera-tube type color television camera has been recently proposed wherein a color separation stripe filter is provided such that a magenta filter is arranged at portions without a cyan filter or portions without cyan and yellow filters so as to block some of green light rays.

- 1 -

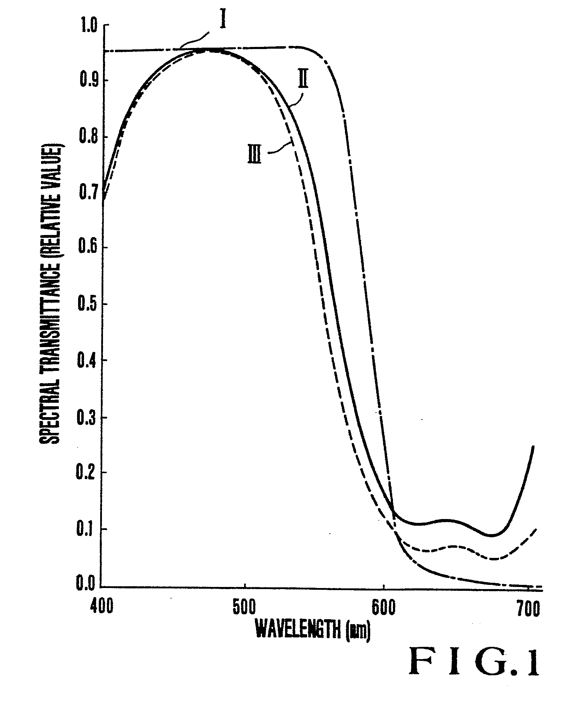

The spectral transmittance characteristics of a cyan stripe filter obtained by organic dyeing and used in a frequency separation type (e.g., a single-carrier frequency separation type as described in USP 3,647,943 and Japanese Patent Publication No. 57-22503) single-camera-tube color television camera tube are preferably given such that a high transmittance must be ideally maintained for a blue light component, as indicated by a characteristic curve I of Fig. 1. However, since a currently commercially available cyan dyestuff has a low transmittance for the blue component, as indicated by a characteristic curve II, a cyan filter also modulates the blue component although this filter must spatially modulate only the red component, resulting in spurious color. In addition, the cyan filter obtained by organic dyeing cannot provide a satisfactory modulation of the red component due to non-steep slope of transmittance curve. In order to obtain ideal color separation characteristics, the half-value wavelength corresponding to 50% transmittance of the cyan filter must fall within a wavelength range of 575 to 585 nm. At the same time, a slope in transmittance near the half-value wavelength must be steep. For example, the value of (80% transmittance - 20% transmittance)/(wavelength corresponding to 20% transmittance - wavelength corresponding to 80% transmittance) must be large. The conventional dyestuff has a half-value wavelength of about 565 nm and its red component transmittance is relatively high, e.g., about 13 to 15%. However, when the transmittance is decreased in this wavelength range, i.e., when the color becomes dark, the half-value wavelength is shifted to the short-wavelength range, as indicated by a characteristic curve III of Fig. 1, thereby greatly impairing the color separation filter characteristics, as described above.

## Summary of the Invention

It is, therefore, an object of the present invention to provide a color separation filter wherein a half-value wavelength of spectral transmittance characteristics of a cyan filter is shifted to a long-wavelength range to improve color absorption properties of the cyan filter, thereby improving color reproduction fidelity.

In order to achieve the above object of the present invention, a magenta filter having a light absorption wavelength range of 550 to 570 nm and a transmittance of 40 to 75% at the light absorption wavelength range is formed at portions without a cyan filter or portions without cyan and yellow filters. The portions fall within an effective imaging surface. The spectral transmittance characteristics of the magenta filter substantially correspond to those of the cyan filter between wavelengths of a blue component and a wavelength of about 560 nm within the visible light range. At the same time, the average transmittance of the cyan filter at a wavelength range of 620 to 680 nm is set to be 8% or less.

Brief Description of the Drawings

Fig. 1 is a graph for explaining the spectral transmittance of a conventional color separation cyan stripe filter as a function of wavelength;

Fig. 2 is an enlarged plan view showing the main part of a color separation stripe filter in a camera tube for a single-camera-tube television camera according to an embodiment of the present invention; and

Fig. 3 is a graph for explaining the spectral transmittance of the filter of Fig. 2 as a function of wavelength.

Description of the Preferred Embodiment

The present invention will be described in detail with reference to a preferred embodiment in conjunction with the accompanying drawings.

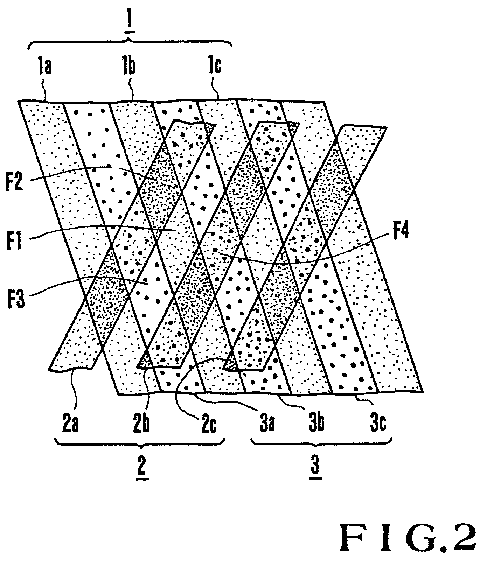

Fig. 2 is an enlarged plan view showing the main part of a color separation stripe filter in a camera tube for single-camera-tube television camera according to an embodiment of the present invention. Referring to Fig. 2, reference numeral 1 denote a cyan stripe filter having a plurality of cyan stripes 1a, 1b, 1c... formed on a light-transmitting glass substrate which serves as a faceplate. The cyan stripes 1a, 1b, 1c... are formed to be parallel with each other at equal intervals and inclined at a predetermined angle. Reference numeral 3 denotes a

- 4 -

magenta stripe filter having magenta stripes 3a, 3b, 3c...
formed between every two adjacent cyan stripes, so that the
magenta stripes 3a, 3b, 3c... are parallel with each other
at the same interval as that of the cyan stripes and are
inclined at the predetermined angle. Reference numeral 2
denotes a yellow stripe filter having yellow stripes 2a,
2b, 2c... which cross the cyan and magenta stripes. As a
result, the color separation stripe filter comprises a cyan
mosaic portion F1 having only cyan stripes, a magenta
mosaic portion F3 having only magenta stripes, a
yellow-cyan mosaic portion F2 having intersecting portions
of the cyan stripes 1a, 1b, 1c... and the yellow stripes
2a, 2b, 2c..., and a yellow-magenta mosaic portion F4
having intersecting portions of the yellow stripes 2a, 2b,
2c..., and the magenta stripes 3a, 3b, 3c....

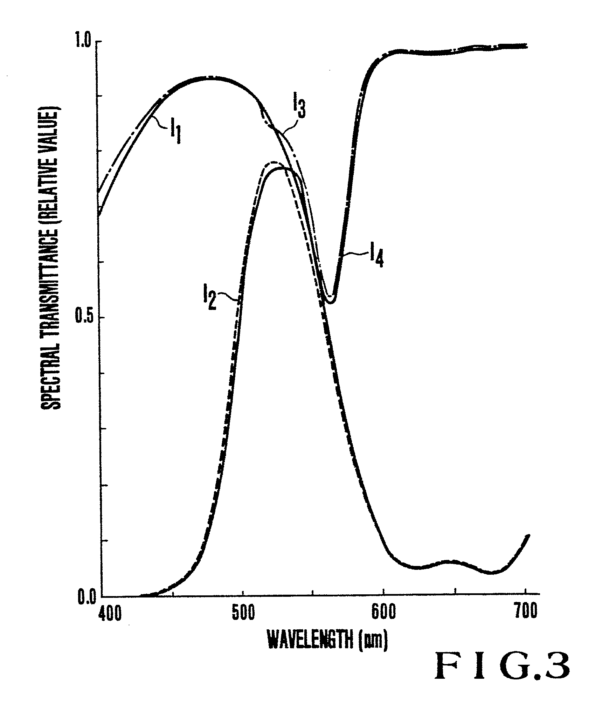

The portion F1 has the spectral transmittance
characteristics indicated by a characteristic curve $I_1$ of
Fig. 3. The portion F2 constituted by the intersecting
portions of the yellow stripes 2a, 2b, 2c... and the cyan
stripes 1a, 1b, 1c... has the spectral transmittance
characteristics indicated by a characteristic curve $I_2$.
The portion F3 constituted by only the magenta stripes 3a,
3b, 3c... has the spectral transmittance characteristics
indicated by a characteristic curve $I_3$. The portion F4
constituted by the intersecting portions of the magenta
stripes 3a, 3b, 3c... and the yellow stripes 2a, 2b, 2c...
has the spectral characteristics indicated by a

characteristic curve $I_4$. In this case, the pitches of the stripe filters 1, 2 and 3 are twice the widths thereof, so that the areas of the portions F1, F2, F3 and F4 are identical.

With the above arrangement, as is apparent from Fig. 3, the characteristic curve $I_3$ of the magenta stripe filter 3 substantially matches with the characteristic curve $I_1$ in the wavelength range of about 400 to 560 nm, and an average transmittance of the cyan stripe filter 1 in the wavelength range of 620 to 680 nm is given as 5 to 8%. Therefore, the color components having short wavelengths will not be spatially modulated by the cyan stripe filter 1, thereby preventing the blue component from being mixed in a red channel signal.

In addition, in the wavelength range of 500 to 560 nm, i.e., the range between a wavelength with the maximum transmittance and near the half-value wavelength of the conventional characteristic curve III in Fig. 1, the characteristic curve $I_3$ (Fig. 3) of the magenta stripe filter substantially matches with the characteristic curve $I_1$ (Fig. 3) of the cyan stripe filter. After the characteristic curve $I_3$ of the magenta stripe filter has a minimum value, the curve $I_3$ is separated from the curve $I_1$, i.e., inverted upward to provide a high transmittance.

The modulation characteristics of the cyan stripe filter 1 depend on the difference between the transmittance of the portions with and without the cyan stripes 1a, 1b

and 1c.... When the spectral transmittance (Fig. 3) of the magenta stripe filter is given as 100% and the characteristic curve III (Fig. 1) of the conventional cyan stripe filter is plotted again, the resultant characteristic curve $I_1$ is obtained such that the half-value wavelength is shifted to the long-wavelength range, thereby obtaining the ideal curve I of Fig. 1.

According to the arrangement of the embodiment described above, a beat signal can be reduced. In general, the beat signal is generated at a low-frequency range due to the repetition pattern of the stripe filters. In the single-camera-tube type television camera, the beat signal is mixed in a low-frequency channel (i.e., luminance signal range), thereby producing dark/bright stripes on the screen and hence degrading picture quality. The generation frequency of the dark/bright stripes is given by a difference between the repetition patterns of the two stripe filters. Although this phenomenon is not directly associated with the scope of the present invention, the beat signal will be briefly described. A beat signal amplitude is given by (C+Y) - (G+W) or (C+Y) - (G+M) where C, Y, G and W (or M) are a cyan signal, a yellow signal, a green signal derived from an overlapping portion of the cyan and yellow components and a white signal derived from a portion without the cyan and yellow components (or the magenta signal), respectively. The spectral distributions

- 7 -

of these signals are given by products of the following parameters:

(1) Spectral energy distribution of a light source $L(\lambda)$;

(2) Spectral reflectance distribution $R(\lambda)$ of an object to be viewed (however, when the light source itself is viewed, the above $L(\lambda)$ and $R(\lambda)$ are replaced with only the spectral energy distribution $L(\lambda)$;

(3) Spectral transmittance $T(\lambda)$ of a lens or correction filter;

(4) Spectral sensitivity distribution $S(\lambda)$ of a photoelectric conversion film; and

(5) Spectral transmittances $FC(\lambda)$, $FY(\lambda)$, $FG(\lambda)$ and $FW(\lambda)$ of cyan, yellow, green and white filters, respectively.

The integrated value of these products are obtained as the outputs. In this case, when the magenta filter is provided in place of the white portion, the signal distribution and the integrated value change and decrease the beat signal components for substantially all colors. In particular, the beat signals in the dark blue and cyan components can be greatly decreased.

According to the color separation stripe filter described above, in the signals generated by the frequency separation type camera tube, low frequency components (i.e., the signals which cannot be modulated by any filters) are decreased due to the presence of the magenta filter. However, the high frequency components (i.e., the signals which can be modulated by the corresponding filters) will not be decreased. In the frequency separation type camera tube, the picture quality is not determined by the luminance signal based on the low frequency components but by the chrominance signal based on the high frequency components. Therefore, the ratio of the chrominance signal to the luminance signal is increased to improve an S/N ratio of the image and to obtain an image having a high color saturation. According to simulation calculations and experiments, the tone of the magenta stripe filter was optimized when a transmittance was 40 to 75% at a wavelength of about 565 nm.

In the above embodiment, the magenta filter is arranged in an effective imaging area without the cyan stripe filter. However, the magenta filter may be formed at a portion without the cyan and yellow filters to obtain the same effect as in the above embodiment.

The above embodiment is exemplified by the stripe filter. However, the present invention is not limited to the stripe filter, but can be extended to a mosaic filter to obtain the same effect as in the embodiment described above.

As is apparent from the above description, according to the color separation filter used in a camera tube for a single-camera-tube type color television camera, the magenta filter having substantially the same spectral transmittance characteristics as those of a cyan filter in the blue light to about 560 nm wavelength light is formed at least at a portion without the cyan filter, thereby relatively shifting the half-value wavelength of the cyan filter to a long-wavelength range, and hence making a slope of transmittance near the half-value wavelength steeper. As a result, the image with high color reproduction fidelity can be obtained.

What is claimed is:

1.     A color separation filter for a color television camera tube, having cyan and yellow striped or mosaic filters formed on an effective imaging surface of a faceplate to spatially modulate red and blue light components, respectively, wherein a magenta filter having substantially the same spectral characteristics as those of said cyan filter within a predetermined range between a short wavelength and a long wavelength is formed at at least a portion without said cyan filter, said portion being included in said effective imaging surface, said magenta filter being arranged such that an absorption wavelength range thereof is 550 nm to 570 nm and a transmittance range thereof is 40% to 75%.

2.     A filter according to claim 1, wherein said cyan filter has an average transmittance of not more than 8% in a long-wavelength range between 620 nm and 680 nm.

3.     A filter according to claim 1, wherein the predetermined range is 400 nm to 560 nm.

4.     A filter according to claim 1, wherein said magenta filter has an optical tone where a transmittance thereof is 40% to 75% at a wavelength of about 565 nm.

5.      A filter according to claim 1, wherein said magenta filter is formed at a portion without said cyan and yellow filters.

FIG.1

0162433

F I G.2

F I G.3